# EUROPÄISCHE PATENTSCHRIFT

(11) **EP 0 514 788 B1**
(45) Veröffentlichungstag und Bekanntmachung des Hinweises auf die Patenterteilung: **26.07.1995**
(21) Anmeldenummer: 92108245.9
(22) Anmeldetag: 15.05.1992
(51) Int. Cl.: H02G 15/013, H02G 15/192

(54) **Längswasserdichte Kabelmuffe**
Longitudinally watertight cable sleeve
Manchon de câble étanche à l'eau longitudinalement

(30) Priorität: 23.05.1991 DE 4116888
(43) Veröffentlichungstag der Anmeldung: 25.11.1992
(73) Patentinhaber: RXS Schrumpftechnik-Garnituren GmbH, D-58093 Hagen (DE)
(72) Erfinder: Boscher, Georg, W-5800 Hagen (DE); Gräfe, Detlef, W-5800 Hagen 7 (DE); Meltsch, Hans-Jürgen, W-5840 Schwerte (DE); Heier, Manfred, W-5804 Herdecke (DE); Sagemühl, Dieter, W-5804 Herdecke (DE)
(74) Vertreter: Fuchs, Franz-Josef, Dr.-Ing.

(56) Entgegenhaltungen:
- EP-A- 0 243 222
- EP-A- 0 243 234
- EP-A- 0 272 806
- DE-A- 3 518 654
- DE-A- 3 640 695
- US-A- 4 883 336

## Beschreibung

Die Erfindung betrifft eine längswasserdichte Kabelmuffe mit einem Muffenkopf, der von einem Außenkörper gebildet ist oder einen solchen enthält, dessen innerer Hohlraum sich zu der der Kabeleinführungsseite entgegengesetzten Seite hin konisch erweitert und einem Innenkörper mit einer an die konische Innenfläche des Außenkörpers angepaßten konischen Außenfläche.

Üblicherweise ist bei längswasserdichten Muffen der gesamte Spleißraum mit einer Füllmasse gefüllt. Dies hat den Nachteil, daß eine große Menge an vergleichsweise teurer Füllmasse verbraucht wird und daß die Füllmasse schlecht in das Spleißbündel eindringen kann, so daß die Abdichtung relativ unzulänglich ist. Ein weiterer Nachteil solcher Muffen besteht darin, daß beim Wiederöffnen der Muffe der Spleißraum zunächst von der Füllmasse gereinigt und beim Wiederschließen neu gefüllt werden muß.

Durch DE 35 18 654 A1 ist ein Verfahren zur Montage einer Abzweigmuffe an einem Starkstromkabel bekannt, bei dem die für die Montage benötigte Gießharzmenge dadurch so gering wie möglich gehalten wird, daß man als Gießform ein Gehäuse aus einem schrumpfbaren Kunststoff verwendet und den Raum innerhalb des Gehäuses erst nach dem Aufschrumpfen des Gehäuses mit Gießharz füllt. Durch das Schrumpfen der Gießform wird das Volumen der verbleibenden Hohlräume so reduziert, daß der zu ihrem Auffüllen erforderliche Gießharzbedarf minimiert wird.

Aus der US-Patentschrift 4.883.336 ist eine Einführung für optische Kabel bekannt, bei der ein Außenkörper einen inneren konisch zulaufenden Hohlraum aufweist. In diesen konisch zulaufenden Hohlraum wird ein angepaßter konischer Innenkörper eingefügt, wobei dieser Innenkörper Längsnuten in der konischen Fläche enthält, in die Lichtwellenleiter eingefügt werden. In diese Nuten wird Plastikmaterial eingespritzt, um eine Längsabdichtung zu erreichen.

In der europäischen Patentanmeldung 0 243 222 A1 ist ein Muffenkopf beschrieben, der aus zwei Halbteilen besteht, wobei die Trennflächen mit einer Dichtungseinlage versehen sind. Die Abdichtung zu den eingeführten Kabeln erfolgt mit einem Dichtungsmittel, das zwischen zwei Scheiben des Muffenkopfes eingespritzt wird.

Der Erfindung liegt die Aufgabe zugrunde, eine längswasserdichte Kabelmuffe zu schaffen, die sich sowohl als Durchgangsmuffe wie auch als Abzweigmuffe oder als Endverschluß eignet und bei geringst möglichem Verbrauch an Füllmasse eine zuverlässige Abdichtung gegen das Eindringen von Wasser gewährleistet.

Diese Aufgabe wird durch eine längswasserdichte Kabelmuffe der eingangs erläuterten Art dadurch gelöst, daß durch den Außenkörper und den Innenkörper ein konischer Ringspalt gebildet ist, daß in dem Ringspalt die Adern des Kabels nach korbartiger Auffächerung aufgenommen sind, daß eine vorbestimmte Menge an Füllmasse, die vor dem Einsetzen des Innenkörpers in den Hohlraum des Außenkörpers eingebracht wird, durch das Einsetzen des Innenkörpers im konischen Ringspalt im Bereich der Adern des Kabels so verpreßbar ist, daß die Adern von der Füllmasse vollständig umschlossen sind.

Es ist ein wichtiger Vorteil der Erfindung, daß durch die Bildung des von Innen- und Außenkörper begrenzten Ringspalts, in dem sich die korbartig aufgefächerten Adern befinden, das mit Füllmasse zu füllende Volumen äußerst gering ist. Ein weiterer wichtiger Vorteil besteht darin, daß durch das Einsetzen des Innenkörpers in den Außenkörper die Füllmasse derart verpreßt wird, daß alle Einzeladern vollständig umschlossen und damit abgedichtet werden, wobei gleichzeitig durch das Hineinpressen einer bestimmten Menge an Füllmasse in die Kabelseele der Füllgrad des bzw. der Kabel und damit die Abdichtung erhöht werden.

Der Außenkörper besteht vorteilhafterweise aus zwei Halbkörpern, deren Trennfläche einer Radialfläche des Außenkörpers entspricht. Damit läßt sich der Außenkörper mühelos über geschnittenen und ungeschnittenen Kabeln montieren.

Der Außenkörper ist vorzugsweise aus transparentem Material hergestellt, so daß eine visuelle Überprüfung des Füllzustandes möglich ist.

Bei einer Muffe, an deren Enden zwei gleichartige Außenkörper vorgesehen sind, sind diese vorzugsweise durch ein den Spleißraum umgebendes Muffenrohr bekannter Art dicht miteinander verbunden.

Der Außenkörper ist vorteilhafterweise insgesamt so ausgebildet, daß er gleichzeitig den Muffenkopf selbst bildet.

Zur Bildung einer Abzweigmuffe, einer Muffe also, bei der wenigstens ein Muffenkopf das Einführen wenigstens zweier Kabel ermöglicht, ist gemäß einer Weiterbildung der Erfindung vorgesehen, daß der Außenkörper wenigstens zwei Hohlräume mit konusförmiger Innenfläche aufweist, denen jeweils ein eigener Innenkörper mit entsprechend ausgebildeter konischer Außenfläche zugeordnet ist. Stattdessen kann jedoch bei einer Abzweigmuffe auch ein Außenkörper verwendet werden, dessen Innenraum die Form eines auf zwei entgegengesetzten Seiten abgeflachten Konus hat, wobei dann der zugeordnete Innenkörper eine in entsprechender Weise abgeflachte konische Außenfläche besitzt.

An der Basisseite des Innenkörpers sind vorteilhafterweise Flanschstege vorgesehen, mit denen der Innenkörper an einem Flansch des Außenkörpers verschraubt werden kann.

Es kann weiter vorgesehen sein, daß an dem Innenkörper ein Ring aus einer klebstoffartigen Masse angebracht ist, der die Adern des Kabels fixiert und den erwähnten Ringspalt gegen den Spleißraum abdichtet.

Schließlich können an den Innenkörpern Verbindungsschienen angebracht sein, die als Montagehilfe und/oder zur Festlegung des Kabelabsetzmaßes und/oder zur dauerhaften Fixierung der Innenkörper dienen.

Im folgenden sei die Erfindung anhand der Zeichnungen näher erläutert:
- Fig. 1: zeigt eine perspektivische Gesamtansicht einer Muffe gemäß der Erfindung,
- Fig. 2: zeigt die in Figur 1 durch II gekennzeichnete Einzelheit der Kabelmuffe in einer Explosionsdarstellung,
- Fig. 3: zeigt eine Figur 2 entsprechende Darstellung des Muffenkopfbereichs einer Abzweigmuffe.

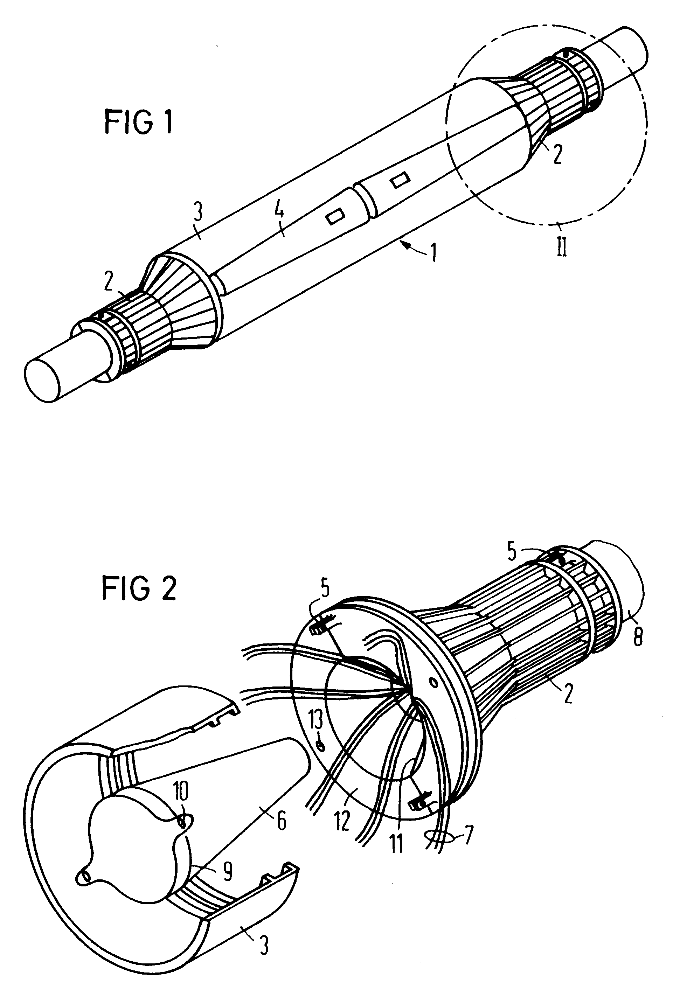

Die in Figur 1 dargestellte Muffe ist insgesamt mit 1 bezeichnet. Sie besteht aus zwei Muffenköpfen 2 und einem Muffenrohr 3, das die Muffenköpfe 2 verbindet und den von ihm umschlossenen Spleißraum hermetisch abdichtet. Das Muffenrohr 3 ist längs einer Mantellinie geschlitzt, so daß es mühelos über dem Schleißraum montiert werden kann. Nach dem Aufbringen wird es durch eine Verschlußschiene 4 bekannter Bauart verschlossen.

Wie aus Figur 2 näher erkennbar ist, besteht der Muffenkopf 2 aus einem im folgenden als Außenkörper bezeichneten Körper, der sich in einem Endbereich trichterförmig erweitert, so daß im Inneren ein konischer Hohlraum gebildet ist.

Es sei hier erwähnt, daß dieser Außenkörper nicht notwendigerweise mit dem Muffenkopf identisch sein muß. Es ist vielmehr auch vorstellbar, daß der Außenkörper in einen entsprechend ausgeformten Muffenkopf eingesetzt ist.

Im dargestellten Ausführungsbeispiel ist der Außenkörper 2 längs einer Radialebene geteilt. Er besteht also aus zwei Halbkörpern, die durch mit 5 angedeutete Schraubverbindungen miteinander verbunden sind.

Weiterhin umfaßt die erfindungsgemäße Muffe einen Innenkörper 6 mit einer konischen Außenfläche, der in den konischen Hohlraum des Außenkörpers 2 einsetzbar ist. Die konische Außenfläche des Innenkörpers 6 ist so gestaltet und bemessen, daß sie nach dem Einsetzen in den Außenkörper 2 mit diesem einen konischen Ringspalt begrenzt, in welchem die abgesetzten Adern 7 des in den Außenkörper 2 einlaufenden Kabels 8 aufgenommen sind. Die Adern 7 sind zu diesem Zweck korbartig aufgefächert, so daß sie in geordneter Folge in dem Ringspalt angeordnet werden können.

Im Bereich der Basisseite des Innenkörpers 6 ist ein vorzugsweise in einer Ringnut angeordneter Ring 9 aus einer Dichtungsmasse vorgesehen, an welchem die Adern 7 festgelegt werden können und der den Ringspalt gegen den Spleißraum abdichtet.

An der Basisseite des Innenkörpers 6 befinden sich ferner zwei mit Bohrlöchern versehene Flanschstege 10, mit denen der Innenkörper 6 an einem Flansch 12 des Außenkörpers 2 verschraubt werden kann.

Im folgenden sei die Funktion der in Figur 1 und 2 dargestellten Muffe näher erläutert:

Zunächst werden die beiden Teile des Außenkörpers 2 an dem in seinem Endbereich abgemantelten Kabel befestigt. Dabei wird ein Ring aus Dichtungsmasse um den Kabelmantel gelegt, der eine Abdichtung bewirkt, wenn die beiden Hälften des Außenkörpers 2 mit Hilfe der Schrauben 5 zusammengefügt werden.

Die Adern 7 werden dann korbartig über die konische Innenfläche des Außenkörpers 2 aufgefächert. Anschließend wird der Innenraum des Außenkörpers 2 bis zu einem vorbestimmten Niveau mit einer Kabelfüllmasse gefüllt. Danach wird der Innenkörper 6 in den Innenraum des Außenkörpers gepresst und mit Schrauben an dem Flansch 12 befestigt. Hierbei bewirkt der an dem Innenkörper 6 vorgesehene Ring 9 aus Dichtungsmasse beim Festlegen der Adern 7 und verhindert ein Eindringen von Feuchtigkeit in den Spleißraum. Wenn auf diese Weise beide Außenkörper 2 an den zugehörigen Kabelenden angebracht und die Adern in der vorgesehenen Weise miteinander verbunden sind, wird das Muffenrohr 3 angebracht, das die beiden Außenkörper 2 miteinander verbindet und dem Raum zwischen ihnen hermetisch abdichtet.

Der in Figur 1 und 2 dargestellte Außenkörper 2, der, wie erwähnt, gleichzeitig den eigentlichen Muffenkopf bildet, ist vorzugsweise transparent, so daß der Füllstand der Füllmasse leicht beobachtet werden kann. Hierdurch wird der Arbeitsaufwand bei der Montage weiter verringert.

Die in der Zeichnung erkennbaren Rippen, die in Richtung von Mantellinien auf der Außenfläche des Außenkörpers 2 verlaufen, dienen einerseits zur Verstärkung des Außenkörpers und bilden andererseits ein dekoratives Element.

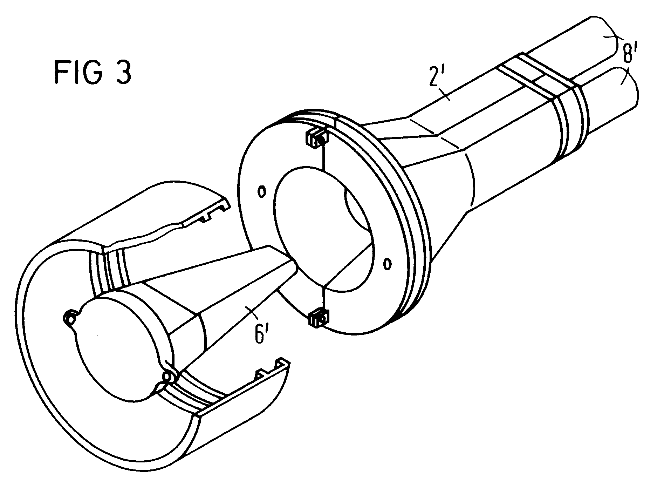

Figur 3 zeigt Teile einer Abzweigmuffe. Der kabelseitige Endbereich des den Muffenkopf bildenden Außenkörpers 2′ kann in diesem Fall zwei Kabel 8′ aufnehmen. Der sich trichterförmig erweiternde entgegengesetzte Endbereich des Außenkörpers 2′ begrenzt einen konischen Hohlraum, dessen Querschnitt im Gegensatz zu dem Ausführungsbeispiel von Figur 1 und 2 nicht kreisförmig sondern oval ist. In Anpassung an den Innenraum des Außenkörpers 2′ bildet die Außenfläche des Innenkörpers 6′ einen auf zwei entgegengesetzten Seiten abgeflachten Konus, so daß er zusammen mit der Innenfläche des Außenkörpers 2′ wieder einen Ringspalt begrenzt, der in diesem Beispiel jedoch keinen kreisförmigen sondern einen ovalen Querschnitt besitzt. In diesem Ringspalt sind die (nicht dargestellten) Adern der beiden Kabel 8′ aufgenommen. In allen übrigen Einzelheiten entspricht das Ausführungsbeispiel von Figur 3 dem oben anhand von Figur 1 und 2 erläuterten Ausführungsbeispiel.

## Patentansprüche

1. Längswasserdichte Kabelmuffe mit einem Muffenkopf, der von einem Außenkörper (2) gebildet ist oder einen solchen enthält, dessen innerer Hohlraum sich zu der der Kabeleinführungsseite entgegengesetzten Seite hin konisch erweitert und einem Innenkörper (6) mit einer an die konische Innenfläche des Außenkörpers angepaßten konischen Außenfläche,
**dadurch gekennzeichnet,**
daß durch den Außenkörper (2) und den Innenkörper (6) ein konischer Ringspalt gebildet ist, daß in dem Ringspalt die Adern (7) des Kabels nach korbartiger Auffächerung aufgenommen sind, daß eine vorbestimmte Menge an Füllmasse, die vor dem Einsetzen des Innenkörpers in den Hohlraum des Außenkörpers eingebracht wird, durch das Einsetzen des Innenkörpers im konischen Ringspalt im Bereich der Adern des Kabels so verpreßbar ist, daß die Adern von der Füllmasse vollständig umschlossen sind.

2. Muffe nach Anspruch 1,
**dadurch gekennzeichnet**,
daß der Außenkörper aus zwei Halbkörpern besteht, deren Trennfläche einer Radialfläche des Außenkörpers entspricht.

3. Muffe nach Anspruch 1 oder 2,
**dadurch gekennzeichnet**,
daß der Außenkörper aus transparentem Material besteht.

4. Muffe nach einem der Ansprüche 1 bis 3,
**dadurch gekennzeichnet**,
daß an ihren Enden zwei gleichartige Außenkörper vorgesehen sind, die durch ein den Spleißraum umgebendes Muffenrohr dicht miteinander verbunden sind.

5. Muffe nach einem der vorhergehenden Ansprüche,
**dadurch gekennzeichnet,**
daß zur Bildung einer Abzweigmuffe wenigstens einer der Außenkörper das Einführen zweier Kabel ermöglicht, daß in diesem Außenkörper wenigstens zwei Hohlräume mit konusförmiger Innenfläche ausgebildet sind, denen jeweils ein Innenkörper mit entsprechend ausgebildeter konischer Außenfläche zugeordnet ist.

6. Muffe nach einem der Ansprüche 1 bis 4,
**dadurch gekennzeichnet,**
daß zur Bildung einer Abzweigmuffe wenigstens einer der Außenkörper die Einführung wenigstens zweier Kabel ermöglicht, daß der Innenraum dieses Außenkörpers die Form eines auf zwei entgegengesetzten Seiten abgeflachten Konus hat und daß der zugeordnete Innenkörper eine entsprechend abgeflachte konische Außenfläche besitzt.

7. Muffe nach einem der vorhergehenden Ansprüche,
**dadurch gekennzeichnet**,
daß an der Basisseite des Innenkörpers Flanschstege (10) vorgesehen sind, mit denen der Innenkörper an einem Flansch (12) des Außenkörpers verschraubt werden kann.

8. Muffe nach einem der vorhergehenden Ansprüche,
**dadurch gekennzeichnet**,
daß an dem Innenkörper im Bereich seiner Basisseite ein Ring aus einer klebstoffartigen Masse vorgesehen ist, an dem die Adern des Kabels fixierbar sind.

9. Muffe nach einem der vorhergehenden Ansprüche,
**dadurch gekennzeichnet**,
daß in den Zentren der Innenkörper Verbindungsschienen angebracht sind, die als Montagehilfe und/oder zur Festlegung des Kabelabsetzmaßes und/oder zur dauerhaften Fixierung der Innenkörper dienen.

## Claims

1. Cable sleeve which is longitudinally watertight, having a sleeve head which is formed by an outer body (2) or contains one, the inner cavity of which expands conically towards the side opposite the cable insertion side, and having an inner body (6) with a conical outer surface matched to the conical inner surface of the outer body, characterized in that a conical annular gap is formed by the outer body (2) and the inner body (6), in that the leads (7) of the cable are accommodated in the annular gap, fanned out in a basket-like manner, in that a predetermined quantity of filling compound, which is introduced before the insertion of the inner body into the cavity of the outer body, can be compressed, by the insertion of the inner body in the conical annular gap, in the region of the leads of the cable in such a way that the leads are completely enclosed by the filling compound.

2. Sleeve according to Claim 1, characterized in that the outer body comprises two half-bodies, whose parting surface corresponds to a radial surface of the outer body.

3. Sleeve according to Claim 1 or 2, characterized in that the outer body consists of transparent material.

4. Sleeve according to one of Claims 1 to 3, characterized in that, at its ends, two similar outer bodies are provided, which are connected to each other in a sealing fashion by means of a sleeve tube surrounding the splicing space.

5. Sleeve according to one of the preceding claims, characterized in that, to form a branching sleeve, at least one of the outer bodies enables the introduction of two cables, in that in this outer body at least two cavities having a cone-shaped inner surface are formed, to which in each case an inner body having a correspondingly designed conical outer surface is allocated.

6. Sleeve according to one of Claims 1 to 4, characterized in that, to form a branching sleeve, at least one of the outer bodies enables the introduction of at least two cables, in that the inner space of this outer body has the form of a cone flattened out on two opposite sides, and in that the associated inner body has a correspondingly flattened-out conical outer surface.

7. Sleeve according to one of the preceding claims, characterized in that, on the base side of the inner body, flange webs (10) are provided, with which the inner body can be screwed to a flange (12) of the outer body.

8. Sleeve according to one of the preceding claims, characterized in that, on the inner body, in the region of its base side, a ring of a glue-like compound is provided, to which the leads of the cable can be fixed.

9. Sleeve according to one of the preceding claims, characterized in that, in the centres of the inner bodies, connecting rails are fitted, which serve as an assembly aid and/or for fixing the cable offset dimension and/or for the permanent fixing of the inner bodies.

## Revendications

1. Manchon de raccordement de câbles à étanchéité longitudinale, comportant une tête de manchon, qui est formée par un élément extérieur (2) ou contient un tel élément, dont la cavité intérieure s'élargit avec une forme conique en direction du côté tourné à l'opposé du côté d'entrée du câble, et un élément intérieur (6) possédant une surface extérieure conique adaptée à la surface intérieure conique de l'élément extérieur, caractérisé par le fait que l'élément extérieur (2) et l'élément intérieur (6) délimitent une fente annulaire conique, que les conducteurs (7) du câble sont logés dans la fente annulaire après avoir été étalés en forme de corbeille et qu'une quantité prédéterminée d'une masse de remplissage, qui est introduite dans la cavité de l'élément extérieur, avant l'introduction de l'élément intérieur, peut être comprimé, sous l'effet de l'insertion de l'élément intérieur, dans la fente annulaire conique dans la zone des conducteurs du câble de telle sorte que les conducteurs sont complètement entourés par la masse de remplissage.

2. Manchon de raccordement de câble suivant la revendication 1, caractérisé par le fait que l'élément extérieur est formé de deux demi-éléments, dont la surface de séparation correspond à une surface radiale de l'élément extérieur.

3. Manchon de raccordement de câble suivant la revendication 1 ou 2, caractérisé par le fait que l'élément extérieur est réalisé en un matériau transparent.

4. Manchon de raccordement de câble suivant l'une des revendications 1 à 3, caractérisé en ce qu'à ses deux extrémités sont prévus deux élément extérieurs identiques, qui sont reliés étroitement entre eux par un tube de manchon entourant un espace d'épissure.

5. Manchon de raccordement de câble suivant l'une des revendications précédentes, caractérisé par le fait que pour la formation d'un manchon de dérivation, au moins l'un des éléments extérieurs permet l'introduction de deux câbles, et que dans cet élément extérieur sont formées au moins deux cavités possédant une surface intérieure conique et auxquelles est associé respectivement un élément intérieur possédant une surface extérieure conique de forme correspondante.

6. Manchon de raccordement de câble suivant l'une des revendications 1 à 4, caractérisé en ce que pour la formation d'un manchon de dérivation, au moins l'un des éléments extérieurs permet l'introduction d'au moins deux câbles, que l'espace intérieur de chaque élément extérieur possède la forme d'un cône aplati sur deux côtés opposés et que le corps intérieur associé possède une surface extérieure qui possède une surface extérieure conique aplatie de façon correspondante.

7. Manchon de raccordement de câble suivant l'une des revendications précédentes, caractérisé par le fait que sur le côté de base de l'élément intérieur sont prévues des barrettes formant brides (10), à l'aide desquelles l'élément intérieur peut être vissé sur une bride (12) de l'élément extérieur.

8. Manchon de raccordement de câble suivant l'une des revendications précédentes, caractérisé en ce que sur le corps intérieur et au niveau de son côté de base est prévu un anneau formé d'une masse semblable à un adhésif, à laquelle peuvent être fixés les conducteurs du câble.

9. Manchon de raccordement de câble suivant l'une des revendications précédentes, caractérisé en ce qu'au niveau des centres des éléments intérieurs sont disposés des rails de liaison, qui sont utilisés comme systèmes auxiliaires de montage et/ou pour la fixation de la partie étagée du câble et/ou pour la fixation durable des éléments intérieurs.
